# EUROPEAN PATENT SPECIFICATION

(11) **EP 1 988 487 B1**
(45) Date of publication and mention of the grant of the patent: **04.04.2012**
(21) Application number: 07107554.3
(22) Date of filing: 04.05.2007
(51) Int. Cl.: G06K 7/00, G06K 19/077, H04B 5/00

(54) **IC card, IC-card reader and method for operating a contactless IC card reader**
IC-Karte, IC-Kartenlesegerät und Verfahren zum Betrieb eines kontaktlosen IC-Kartenlesegerätes
Lecteur de carte CI, carte CI et procédé de fonctionnement d'un lecteur de carte CI sans contact

(43) Date of publication of application: 05.11.2008
(73) Proprietor: Vodafone Holding GmbH, 40213 Düsseldorf (DE)
(72) Inventor: Van Muijen, Robert, 3665 As (BE)
(74) Representative: Cullinane, Marietta Bettina

(56) References cited:
- EP-A- 1 770 605
- EP-A1- 0 689 149
- EP-A1- 1 607 906
- WO-A-03/069538
- WO-A-2005/013506
- WO-A-2007/031318

## Description

The present invention relates to a contactless IC card and IC card reader, an IC card reader, in particular within a mobile phone, and to a method for operating a contactless IC card reader.

IC cards, such as SIM (Subscriber Identity Modules) or smart cards can be used in combination with a reader which can gather information stored on the card. In case of passive IC cards, i.e. cards that do not have a power supply to generate a radio frequency field for transmission of data or information from the card to the reader, the power has to be supplied by the reader. As the power necessary for generating an RF field for powering the antenna of a contactless card is considerable, the battery source of the reader has to be designed accordingly. The RF field has to be present, once an IC card is in the vicinity of the reader and transmission of data or information from the card to the reader should occur.

For detection of a card, from which data is to be obtained within the vicinity of a reader US 2006/0175406 A1 suggests a method for RF card detection in a contactless system is. The method of this prior art reference can be used to detect a specific card within the vicinity of a reader by monitoring collision of responses from cards. As the reader has to be activated for the detection according to this prior art method, the problem of considerable power consumption of the reader is not solved by the suggested method.

WO 2007/031318 A1 which is regarded as closest prior art document, relates to a transponder actuatable switching device. This device comprises an HF-Oscillator and a read antenna. The read antenna is adapted to a determined voltage. The oscillator and the antenna are coupled via a measuring bridge, which consists of two parallel connected voltage dividers. One of the resistors of this measuring bridge is replaced by the impedance of the antenna.

Once the antenna is brought into the close proximity of a transponder, the impedance changes and thus a change in resistance in the measuring bridge is determined. Upon detection of the change in resistance a switching signal is generated and a respective switch is activated. One disadvantage of this switching device is that also changes in the impedance due to presence of conductive objects other than a card, may result in a switching of the device.

WO 03/069538 A1 relates to switching device actuated with a transponder. This device is based on an oscillating circuit with a capacitance, an identification coil and an oscillator amplifier. A frequency observer evaluates the frequency tuned in the oscillating circuit and emits a switch signal if a change of frequency is detected. With this switching device frequency changes at the identification coil are monitored. As those may, however, be induced by different conditions other then the mere presence of a transponder, the determination of the presence of a card in the vicinity of a reader may not be reliably be performed.

In recent developments, in addition, readers of IC cards have been integrated within mobile terminals, in particular mobile phones. The power supply that can be offered by the battery of a mobile terminal is limited due to the strict requirements on size and weight of the terminal.

The problem underlying the present invention is thus to provide a solution for optimizing power usage within a reader for an IC card, which simultaneously provides for a reliable yet easy detection of an IC card in the vicinity of an IC card reader. An appropriate solution for said problem can be found in a reader according to claim 8 and a method operating said reader according to claim 1.

According to a first aspect, the present invention relates to a method for operating a contactless IC card reader having at least two modes of operation. The IC card reader comprises an oscillator. The method is characterized in that a reader in a standby mode is automatically switched to a read mode upon detection of the presence of a contactless IC card within the vicinity of the reader, wherein the presence of a contactless IC card within the vicinity of the IC card reader is detected in the IC card reader by monitoring power consumption of the oscillator.

By providing an automatic change of mode of operation upon detection of an IC card, the settings for the different modes of the IC card reader can be adapted to respective needs for these modes. The IC card to be detected by the IC card reader is for example a contactless smart card or SIM card. While no IC card is close to the IC card reader, the power for operating the IC card reader can be kept to a minimum. This mode, where the high RF signal is preferably set to low, is referred to as the standby mode. Only when an IC card is within the vicinity of the IC card reader power for generating an RF filed to excite and power the IC card has to be provided. In this mode, which is also referred to as the read mode, the power consumption of the reader is increased over the standby mode. By this power management, the power consumption of the IC card reader can be minimized as the higher power consumption will only occur in read mode. In addition, no action from the user is necessary to change from one mode to the other as this change happens automatically upon detection of an IC card in the vicinity of the IC card reader. The manual changing of modes, for example in a menu, is not necessary. Therefore the IC card reader can conveniently be used and will only require a limited amount of power.

According to one embodiment, an oscillator of the reader is powered in the standby mode to operate at low radio frequency output.

By setting the oscillator output level to a lower level, the battery consumption of the reader can be reduced during standby. In addition, the output level of the oscillator can be controlled and can thus easily be changed by control means within the IC card reader.

According to the invention, the presence of a contactless IC card within the vicinity of the reader is detected in the reader by monitoring power consumption of the oscillator.

An oscillator will draw energy to excite and power a nearby contactless SIM by the reader. By monitoring the power consumption of the oscillator, the presence of an IC card can thus be detected reliably. The monitoring of other parameters within the IC card reader, such as the resonant frequency of the oscillator, may also be used to detect the presence of an IC card near the IC card reader. The monitoring of this parameter is, however, less preferred as a change of resonant frequency may occur frequently, e.g. due to nearby conductive objects. The power consumption of the oscillator in contrast will only change, if an antenna tuned to the same frequency will be close to the IC card reader. Hence, the detection of the presence of an IC card by monitoring the power consumption of the oscillator is more reliable.

Preferably, the power consumption of the oscillator is monitored by measuring the voltage across a resistor and comparison of the measured value to a preset value.

The resistor and the comparator for comparing the measured value to a preset value form part of a current detection circuit. The preset value is a reference voltage or threshold value, which is preferably constant. If the measured voltage of the current across the resistor reaches this threshold value, the presence of an IC card in the vicinity can be assumed and the respective measures can be taken within the IC card reader to change from the standby mode to the read mode. The output of the current detection circuit can serve as an input for a control-logic unit. It will, hence, be possible to adjust the logic settings depending on the presence or absence of a contactless card determined by the measured current dip.

Preferably, the control-logic or control-logic unit controls the signal to the oscillator and/or a signal to a central processing unit (CPU) of the reader. This is preferable in that the required RF level for the oscillator can be adjusted according to the input of the current detection circuit and at the same time settings or applications stored on the CPU can be applied or initiated. In particular, an application or a protocol, such as a contactless smart card communication protocol can be started via the control-logic unit at the CPU. Such settings or applications at the CPU will preferably only be applied or initiated if the current detection circuit detects a current drop indicative of the presence of an IC card in the close vicinity of the IC card reader.

According to one embodiment, the central processing unit may activate a reader application and receive information on the status of the reader application. The reader application may in particular initiate the set-up of a communication channel to an IC card according to a predefined protocol. The status on the reader application may for example be the failure in establishing a communication channel, if the card is no longer in close proximity of the IC card reader. Also the termination of the communication and hence the interruption of the communication channel at the end of a communication session initiated by the reader application may be communicated to the CPU. At this point the CPU will transmit a signal to the control-logic that the RF level for the oscillator should be changed, in particular should be set to high RF low. With the RF level being set to low, the IC card reader will be in the standby mode again.

According to one embodiment, the reader periodically changes between the standby mode and an off mode. As no energy will be drawn by the oscillator when the IC card reader is in the off mode, the energy consumption of the reader can be further decreased and the battery life can be increased. With a periodical change to the standby mode, the presence of an IC card can nevertheless be detected reliably.

According to another aspect, the present invention relates to an IC card reader for contactless IC cards, comprising an antenna for emitting and/or receiving RF signals to and/or from a contactless IC card, an oscillator and at least one control-logic, i.e. control-logic unit. The IC card reader is characterized in that the control-logic is connected to a control input of the oscillator and in that the control-logic comprises an input from at least one detection unit for detecting the presence of contactless IC cards and in that the detection unit comprises a measuring unit for measuring the current consumption of the oscillator.

The detection unit is a current detection circuit for measuring the current drawn by the oscillator. Via the control inlet or input of the oscillator, the RF level at which the oscillator is to be operated can be set. Since this control input of the oscillator is connected to the control-logic where the result of the detection of the presence of a contactless IC card is received, the RF level can be adjusted depending on the presence or absence of an IC card.

In a preferred embodiment the detection unit comprises a comparator for comparing measured values relating to the power consumption of the oscillator to a reference value or threshold value. The IC card reader preferably comprises control-logic for controlling the input of the oscillator and / or for providing and/or receiving control signals to and/or from a central processing unit.

In a preferred embodiment, the reader is integrated and / or inserted into a mobile terminal, in particular a mobile phone. Especially with mobile phones, where the only power source is the battery of the mobile phone, the advantages of the present invention can be used. The reduced power consumption of the reader will lead to an increase of battery life. In addition the integration or insertion of an IC card reader into a mobile terminal or phone is advantageous in that the reader function can be used at different locations and the data or information obtained from a card via the reader may be further used or processed in the mobile terminal and may also be transmitted from the mobile terminal.

According to another aspect, the present invention relates to a contactless IC card and an IC card reader which are characterized in that the IC card comprises at least one tank circuit for detection of the card by the IC card reader in standby mode, wherein the IC card comprises one loop or tank circuit for communication with the IC card reader in read mode and an additional tank circuit provided in parallel to a loop or tank circuit, wherein the additional tank circuit is tuned to the frequency used by the IC card reader to detect IC cards in the vicinity thereof.

The additional tank circuit is a tuned LC circuit and can comprises a shunt resistor for broadening the resonance bandwidth of the tank circuit.

The tank circuit is an additional tank circuit provided in parallel to a tank circuit for communication with the IC card reader in read mode. Thereby an independent detection means is provided at the IC card. The additional tank circuit will not be necessary for the communication with the IC card reader, i.e. the transfer of information or data, and can thus be tuned to the specific frequency used by IC card readers to detect IC cards in the vicinity thereof.

According to one embodiment, the additional tank circuit is attached to the outer side of the IC card. The tank circuit may be glued to a pre-manufactured IC card. As the sole purpose of the additional tank circuit is for detection of the card, no connection to further circuits within the card is necessary. The additional tank circuit may thus be applied to the card after its manufacturing.

Units of the IC card and the IC card reader may be realized as electronic circuits and/or software. The units may also at least partially be combined with one another.

Features and advantages which are described with reference to the inventive method also apply to the IC card reader and the contactless IC card, respectively, and vice versa.

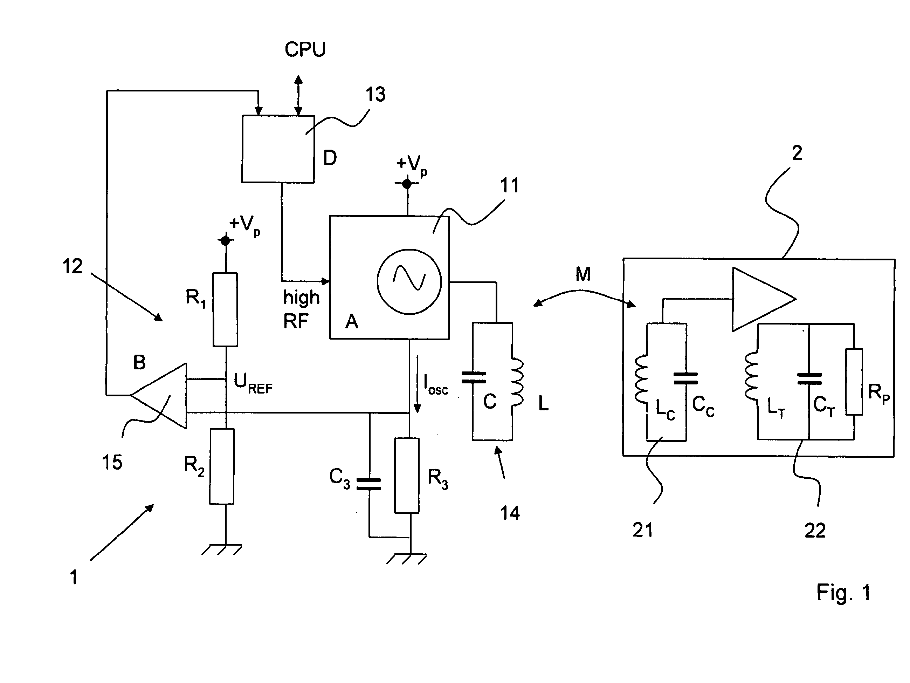

The present invention will now be described again with reference to the enclosed Figure 1.
Figure 1 shows a schematic functional block- diagram of one embodiment of the IC card detector and of a contactless IC card according to the present invention.

Figure 1 shows the schematic diagram of the IC card reader 1 according to one embodiment of the present invention and a contactless IC card 2 according to one embodiment of the present invention.

The IC reader 1 consists of an RF oscillator 11, a current detection circuit 12 and control-logic 13. The oscillator 11 is connected to a tank coil 14 or antenna. The oscillator 11 is further connected to a resistor R₃ and a capacitor C₃. The measurement across R₃ and C₃ is used as an input for a comparator 15 of the current detection circuit 13. The second input to the comparator 15 is a threshold value or reference voltage U_{ref}. The output of the current detection circuit 12, in particular of the comparator 15 is used as input for the control-logic or control-logic unit 13. The control-logic 13 is further connected to a central processing unit (CPU).

On the contactless IC card 2 a tank circuit L_{c}C_{c} 21 is provided. In addition a parallel tank circuit L_{T}C_{T} 22 is shown. In this additional tank circuit 22 also a shunt resistor R_{P} included. The additional tank circuit 22 may be attached to the IC card, e.g. may be glued to the IC card.

The operation of the IC card reader 1 will now be described in detail.

In standby mode, the IC card reader 1 the signal high RF is low so the oscillator 11 operates at a low power output. The power necessary for the operation of the oscillator 11 will be drawn from a battery (not shown). In case the IC reader 1 is integrated into a mobile phone, the power may be drawn from the battery of the mobile phone. In the standby mode the oscillator 11 draws less power from the battery and the battery life can thus be prolonged. The oscillator 11 and the tank coil or tank circuit 14 will, even with the low power, generate an electromagnetic field, in particular an RF field.

If an IC card, such as a smart card 2, with a tuned LC-circuit 21 comes into close proximity of the RF field generated by the tank coil 14 and oscillator 11 the current I_{osc} will dip, i.e. will become less. This current drop will occur as the tank-circuit 14 of the IC reader 1 and the tank circuit 21 of the IC card resonate on same frequency. The RF field is low enough not to power the IC card or smart card 2 which enhances the Q-factor of the L_{c}C_{c} tank circuit 21.

The current dip is detected by the comparator 15 as the voltage drop across R₃ reaches a certain threshold-level U_{ref} at the input of comparator 15. The current detection circuit 12 triggers the control-logic 13 to become the signal high RF high, to raise the RF output power of the oscillator 11. In addition the control-logic 13 triggers the CPU to start a contactless smart card communication protocol, stored therein. In this state the IC card reader 1 can read information from the IC card 2. For this, the IC reader 1 will attempt to set up a communication channel with the IC card 2.

If the CPU notices that there was apparently no IC card 2 available, for example if no communication channel could be set-up, or if the communication between the IC card reader 1 and the IC card 2 needs to end because the contactless application terminates, the CPU together with control-logic 13 force the signal high RF at the oscillator 11 to become low. After a certain period of time (e.g. 3 seconds) the control-logic 13 may allow the oscillator 11 to start up at high power again in case a contactless smart card 2 is detected.

As some contactless smartcards do not use a tank circuit 21 that is tuned to the required frequency, but instead use a simple pick-up loop. Therefore, an additional parallel tank-circuit L_{T}C_{T} and R_{P} 22 can be glued to the IC card, in particular a smartcard 2. The shunt resistor R_{P} is used to lower the Q factor of the tank circuit 22 in order to make the resonance bandwidth broader to effectively enhance the detection mechanism.

The additional parallel circuit 22 can be put on a small flexible PCB (printed circuit board) board that is foreseen with an adhesive layer so it can be glued on the IC card 2. The inductance L_{T} must be made of a circular spiral copper PCB trace and its size can be as small as 6 square centimetres.

The present invention, thus allows for automatic detection of a contactless smart card close by a contactless smart card reader, where the reader is built into the mobile phone. Furthermore the invention provides for user friendly deployment of contactless smart card application without the need to switch the enabling of the application on and off manually on the mobile phone.

With the present invention it is thus not necessary for the user of the reader, which may be included in a mobile phone to switch the reader or the RF-oscillator in a mobile phone on and off manually to power the remote contactless SIM or smartcard in order to be able to use contactless applications such as SIM with the mobile phone.

## Claims

1. Method for operating a contactless IC card reader (1) having at least two modes of operation, wherein the IC card reader (1) comprises an oscillator (11) connected to an antenna (14) of the IC card reader (1), wherein the IC card reader (1) being in a standby mode is automatically switched to a read mode upon detection of the presence of a contactless IC card (2) within the vicinity of the IC card reader (1)
**characterized in that** the presence of a contactless IC card (2) within the vicinity of the IC card reader (1) is detected in the IC card reader (1) by monitoring power consumption of the oscillator (11).

2. Method according to claim 1, **characterized in that** an oscillator (11) of the IC card reader (1) in the standby mode is powered to operate at low radio frequency power output level, in particular below a required level to provide power to contactless IC card (2) for communication with the IC card reader (1).

3. Method according to claim 1 or 2, **characterized in that** the power consumption of the oscillator (11) is monitored by measuring the voltage across a resistor (R₃) and comparison of the measured value to a preset value (U_{ref}).

4. Method according to any one of claims 1 to 3, **characterized in that** result of the presence detection of a contactless IC card (2) is used as input for control-logic (13) of the IC card reader (1).

5. Method according to claim 4, **characterized in that** the control-logic (13) controls the signal to the oscillator (11) and/or a signal to a central processing unit (CPU) of the IC card reader (1).
Main request

6. Method according to claim 5, **characterized in that** the central processing unit (CPU) activates a reader application and receives information on the status of the reader application.

7. Method according to any one of claims 1 to 6, **characterized in that** the IC card reader (1) periodically changes between the standby mode and an off mode.
mode.

8. IC card reader for contactless IC cards, comprising an antenna (14) for emitting and/or receiving RF signals to and/or from a contactless IC card (2), an oscillator (11) connected to the antenna (14) and at least one control-logic (13), **characterized in that** the control-logic (13) is connected to a control input of the oscillator (11) and **in that** the control-logic (13) comprises an input from at least one detection unit (12) for detecting the presence of contactless IC cards (2) and **in that** the detection unit (12) comprises a measuring unit for measuring the current consumption of the oscillator (11).

9. IC card reader according to claim 8, **characterized in that** the detection unit (12) comprises a comparator (15) for comparing measured values relating to the power consumption of the oscillator (11) to a reference value (U_{ref}).

10. IC card reader according to any one of claims 8 to 9, **characterized in that** the control-logic (13) is adapted for controlling the input of the oscillator (11) and /or for providing and/or receiving control signals to and/or from a central processing unit (CPU).

11. IC card reader according to any of claims 8 to 10, **characterized in that** the IC card reader (1) is integrated and / or inserted into a mobile terminal, in particular a mobile phone.

12. Contactless IC card (2) and IC card reader (1) according to claim 8,
**characterized in that** the IC card (2) comprises one loop or tank circuit (21) for communication with the IC card reader (1) in read mode and an additional tank circuit (22) provided in parallel to the loop or tank circuit (21), wherein the additional tank circuit (22) is tuned to the frequency used by the IC card reader (1) to detect the IC card (2) in the vicinity thereof, when the reader (1) is in a standby mode.

13. Contactless IC card and IC card reader according to claim 12, **characterized in that** the additional tank circuit (22) comprises a shunt resistor (R_{P}) for broadening the resonance bandwidth of the tank circuit (22).

14. Contactless IC card and IC card reader according to any one of claims 12 to 13, **characterized in that** the additional tank circuit (22) is attached to the outer side of the IC card (2).

## Patentansprüche

1. Verfahren zum Betreiben eines kontaktlosen IC-Karten-Lesers (1), der zumindest zwei Betriebsmodi besitzt, wobei der IC-Karten-Leser (1) einen Oszillator (11) umfasst, der mit einer Antenne (14) des IC-Karten-Lesers (1) verbunden ist, wobei der IC-Karten-Leser (1), der sich in einem Stand-By-Modus befindet, bei Erkennen der Anwesenheit einer kontaktlosen IC-Karte (2) in der Nähe des IC-Karten-Lesers (1) automatisch in einen Lesemodus umgeschaltet wird, **dadurch gekennzeichnet, dass** die Anwesenheit einer kontaktlosen IC Karte (2) in der Nähe des IC-Karten-Lesers (1) in dem IC-Karten-Leser (1) durch Überwachen des Stromverbrauchs des Oszillators (11) erkannt wird.

2. Verfahren nach Anspruch 1, **dadurch gekennzeichnet**, das ein Oszillator (11) des IC-Karten-Lesers (1) in dem Stand-By-Modus mit Strom versorgt wird, um bei einem niedrigen Radiofrequenz Stromausgabe-Level zu arbeiten, insbesondere unterhalb eines erforderlichen Levels, um Strom zu der kontaktlosen IC Karte (2) für die Kommunikation mit dem IC-Karten-Leser (1) zu liefern.

3. Verfahren nach einem der Ansprüche 1 oder 2, **dadurch gekennzeichnet, dass** der Stromverbrauch des Oszillators (11) durch Messen der Spannung über einen Widerstand (R₃) und Vergleich des gemessenen Wertes mit einem vorgegebenen Wert (U_{ref}) überwacht wird.

4. Verfahren nach einem der Ansprüche 1 bis 3, **dadurch gekennzeichnet, dass** das Ergebnis der Anwesenheitserkennung einer kontaktlosen IC Karte (2) als Eingabe für eine Steuerungslogik (13) des IC-Karten-Lesers (1) verwendet wird.

5. Verfahren nach Anspruch 4, **dadurch gekennzeichnet, dass** die Steuerungslogik (13) das Signal an den Oszillator (11) und/oder ein Signal an eine zentrale Verarbeitungseinheit (CPU) des IC-Karten-Lesers (1) steuert.

6. Verfahren nach Anspruch 5, **dadurch gekennzeichnet, dass** die zentrale Verarbeitungseinheit (CPU) eine Leser-Anwendung aktiviert und Informationen über den Status der Leser-Anwendung empfängt.

7. Verfahren nach einem der Ansprüche 1 bis 6, **dadurch gekennzeichnet, dass** der IC-Karten-Leser (1) periodisch zwischen dem Stand-By-Modus und einem Aus-Modus wechselt.

8. IC-Karten-Leser für kontaktlose IC-Karten, umfassend eine Antenne (14) zum Ausgeben und/oder Empfangen von RF Signalen an und/oder von einer kontaktlosen IC-Karte (2), einen Oszillator (11) verbunden mit der Antenne (14) und zumindest eine Steuerungslogik (13), **dadurch gekennzeichnet, dass** die Steuerungslogik (13) mit einem Steuerungseingang des Oszillators (11) verbunden ist und **dadurch**, dass die Steuerungslogik (13) einen Eingang von zumindest einer Erkennungseinheit (12) zum Erkennen der Anwesenheit von kontaktlosen IC-Karten (2) umfasst und **dadurch**, dass die Erkennungseinheit (12) eine Messeinheit zum Messen des derzeitigen Verbrauchs des Oszillators (11) umfasst.

9. IC-Karten-Leser nach Anspruch 8, **dadurch gekennzeichnet, dass** die Erkennungseinheit (12) einen Komparator (15) zum Vergleichen gemessener Werte betreffend den Stromverbrauch des Oszillators (11) mit einem Referenzwert (U_{ref}) umfasst.

10. IC-Karten-Leser nach einem der Ansprüche 8 bis 9, **dadurch gekennzeichnet, dass** die Steuerungslogik (13) ausgelegt ist zum Steuern des Eingangs des Oszillators (11) und /oder zum zur Verfügung Stellen und/oder zum Empfangen von Steuerungssignalen an und/oder von einer zentralen Verarbeitungseinheit (CPU).

11. IC-Karten-Leser (1) nach einem der Ansprüche 8 bis 10, **dadurch gekennzeichnet, dass** der IC-Karten-Leser (1) in ein mobiles Endgerät, insbesondere ein Mobiltelefon, integriert und/oder eingeführt ist.

12. Kontaktlose IC Karte (2) und IC-Karten-Leser (1) nach Anspruch 8, **dadurch gekennzeichnet, dass** die IC-Karte (2) eine Loop- oder Tank-Schaltung (21) zur Kommunikation mit dem IC-Karten-Leser (1) in dem Lesemodus und eine zusätzliche Tank-Schaltung (22), die parallel zu der Loop- oder Tank-Schaltung (21) vorgesehen ist, umfasst, wobei die zusätzliche Tankschaltung (22) auf die Frequenz eingestellt ist, die durch den IC-Karten-Leser (1) zum Erkennen der IC-Karte (2) in der Nähe davon verwendet wird, wenn der Leser (1) sich in einem Stand-By-Modus befindet.

13. Kontaktlose IC-Karte (2) und IC-Karten-Leser nach Anspruch 12, **dadurch gekennzeichnet, dass** die zusätzliche Tankschaltung (22) einen Nebenwiderstand (Rp) zur Erweiterung der Resonanzbandbreite der Tankschaltung (22) umfasst.

14. Kontaktlose IC-Karte (2) und IC-Karten-Leser nach einem der Ansprüche 12 oder 13, **dadurch gekennzeichnet, dass** die zusätzliche Tankschaltung (22) an der Außenseite der IC-Karte (2) befestigt ist.

## Revendications

1. Procédé permettant d'exploiter un lecteur de carte CI sans contact (1) ayant au moins deux modes de fonctionnement, dans lequel le lecteur de carte CI (1) comprend un oscillateur (11), raccordé à une antenne (14) du lecteur de carte CI (1), dans lequel le lecteur de carte CI (1) étant dans un mode veille est automatiquement basculé en un mode lecture lors de la détection de la présence d'une carte CI sans contact (2) au voisinage du lecteur de carte CI (1), **caractérisé en ce que** la présence d'une carte CI sans contact (2) au voisinage du lecteur de carte CI (1) est détectée dans le lecteur de carte CI (1) en contrôlant la consommation électrique de l'oscillateur (11).

2. Procédé selon la revendication 1, **caractérisé en ce qu'**un oscillateur (11) du lecteur de carte CI (1) en mode veille est alimenté pour fonctionner à un bas niveau de puissance de sortie de radiofréquence, en particulier inférieure à un niveau requis afin d'alimenter en électricité la carte CI sans contact (2) pour une communication avec le lecteur de carte CI (1).

3. Procédé selon la revendication 1 ou 2, **caractérisé en ce que** la consommation d'énergie de l'oscillateur (11) est contrôlée en mesurant la tension aux bornes d'une résistance (R₃) et en comparant la valeur mesurée à une valeur prédéterminée (U_{ref}).

4. Procédé selon l'une quelconque des revendications 1 à 3, **caractérisé en ce que** le résultat de la détection de présence d'une carte CI sans contact (2) est utilisé comme entrée pour une logique de commande (13) du lecteur de carte CI (1).

5. Procédé selon la revendication 4, **caractérisé en ce que** la logique de commande (13) commande le signal vers l'oscillateur (11) et/ou un signal vers une unité centrale (UC) du lecteur de carte CI (1).

6. Procédé selon la revendication 5, **caractérisé en ce que** l'unité centrale (UC) active une application de lecteur et reçoit des informations sur le statut de l'application lecteur.

7. Procédé selon l'une quelconque des revendications 1 à 6, **caractérisé en ce que** le lecteur de carte CI (1) passe périodiquement du mode veille au mode arrêt.

8. Lecteur de carte CI pour cartes à CI sans contact, comprenant un antenne (14) destinée à émettre et/ou recevoir des signaux RF vers et/ou en provenance d'une carte CI sans contact (2), un oscillateur (11) connecté à l'antenne (14) et au moins une logique de commande (13), **caractérisé en ce que** la logique de commande est raccordée à une entrée de commande de l'oscillateur (11) et **en ce que** la logique de commande (13) comprend une entrée en provenance d'au moins une unité de détection (12) pour détecter la présence de cartes à CI sans contact (2) et **en ce que** l'unité de détection (12) comprend une unité permettant de mesurer la consommation de courant de l'oscillateur (11).

9. Lecteur de carte CI selon la revendication 8, **caractérisé en ce que** l'unité de détection (12) comprend un comparateur (15) permettant de comparer des valeurs mesurées par rapport à la consommation d'énergie de l'oscillateur (11) à une valeur de référence (U_{ref})

10. Lecteur de carte CI selon l'une quelconque des revendications 8 à 9, **caractérisé en ce que** la logique de commande (13) est adaptée pour commander l'entrée de l'oscillateur (11) et/ou pour fournir et/ou recevoir des signaux de commande à et/ou depuis une unité centrale (UC).

11. Lecteur de carte CI selon l'une quelconque des revendications 8 à 10, **caractérisé en ce que** le lecteur de carte CI (1) est intégré et/ou inséré dans un terminal mobile, en particulier un téléphone mobile.

12. Carte CI sans contact (2) et lecteur de carte CI sans contact (1) selon la revendication 8, **caractérisés en ce que** la carte CI (2) comprend un circuit en boucle ou un circuit oscillant final (21) permettant de communiquer avec le lecteur de carte CI (1) en mode lecture et un circuit oscillant final additionnel (22) disposé en parallèle au circuit en boucle ou circuit oscillant final (21), dans lequel le circuit oscillant final additionnel (22) est accordé à la fréquence utilisée par le lecteur de carte CI (1) afin de détecter la carte CI (2) dans le voisinage de ce dernier, quand le lecteur (1) est en mode veille.

13. Carte CI sans contact et lecteur de carte CI selon la revendication 12, **caractérisé en ce que** le circuit oscillant final additionnel (22) comprend une résistance shunt (R_{P}) permettant d'élargir la bande passante de résonnance du circuit oscillant final (22).

14. Carte CI sans contact et lecteur de carte CI selon la revendication 12, **caractérisé en ce que** le circuit oscillant final (22) est attaché au côté extérieur de la carte CI (2).
